# EUROPEAN PATENT SPECIFICATION

(11) **EP 1 101 553 B1**
(45) Date of publication and mention of the grant of the patent: **18.02.2004**
(21) Application number: 99121999.9
(22) Date of filing: 11.11.1999
(51) Int. Cl.: B23B 31/12

(54) **Self-locking chuck**
Selbstverriegelbares Futter
Mandrin autobloquant

(43) Date of publication of application: 23.05.2001
(73) Proprietor: Chum Power Machinery Corp., Ta Li City, Taichung Hsien (TW)
(72) Inventor: Kuo, Wen-Chin, Ta Li City, Taichung Hsien (TW)
(74) Representative: Reinhard - Skuhra - Weise & Partner

(56) References cited:
- EP-A- 0 791 422
- WO-A-91/12914
- DE-U- 29 808 626
- DE-U- 29 813 077
- DE-U- 29 913 083

## Description

### BACKGROUND OF THE INVENTION

### 1. Field of the Invention

The present invention relates to a drill chuck for use with electric or pneumatic drivers and specifically relates to a chuck possessing a sleeve member which can be operated manually or is self-locking and increases the gripping force.

### 2. Description of the Prior Art

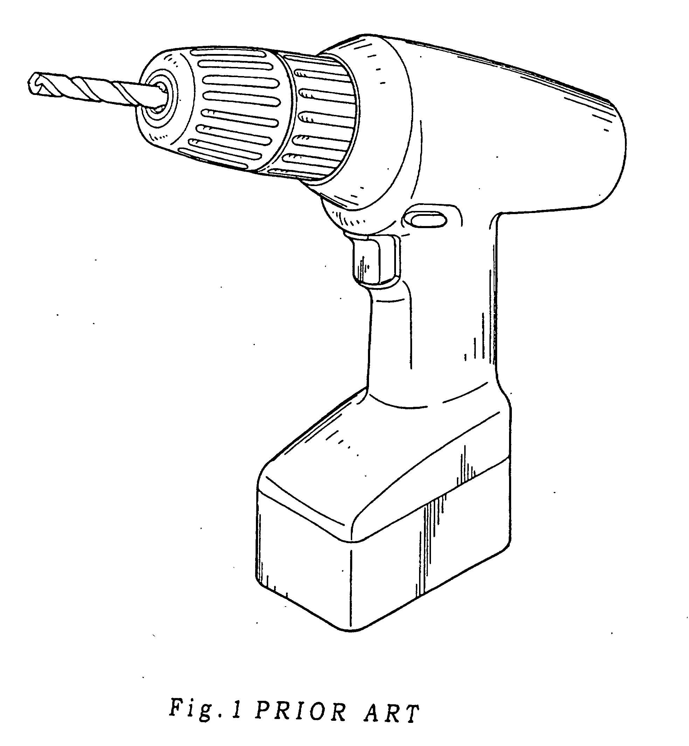

A drill chuck of the prior art, as shown is Figure 1, is chiefly comprised of body for receipt of a spindle, said body whose exterior having an adjustable cover shell and locking cover shell and said body having a plurality of jaw members disposed within the body member, where rotation of the adjustable cover shell controls the extension and retraction of the jaw members which grip or release the drill bit.

The user of a drill chuck of the prior art must rotate the adjustable cover shell with one hand while holding the drill bit inside the jaw members until the drill bit is locked in place. Not only is this awkward to handle, the limited surface available on adjustable cover shell often makes it difficult to determine whether or not enough gripping force has been applied between the drill bit and jaw members. If the gripping force around the drill bit is insufficient, the machine must be shut down and adjustable cover shell rotated by hand to tighten the drill bit. Besides being inconvenient, the adjustable cover shell and locking cover shell may still be in motion poising a risk of injury to the user.

A self-locking chuck according to the preamble of claim 1 is already disclosed in DE 299 13 083 U1. With this known design, a cover shell is comprised of a stationary top cover shell and a stationary bottom cover shell and a pivotable ring. This ring comprises an inner threading which engages another threading of the bottom cover shell, and turning said ring lowers a thrust bearing ring from engagement of the teeth of an additional coupling ring. On the other hand, this coupling ring is in permanent engagement with the threaded socket. This known self-locking chuck is working well, however, its production with the special housing design and the engagement arrangement need improvement to reduce the number of parts involved, same as with regard to an easy handling.

According to the invention, there is provided a self-locking chuck according to claim 1. Further, advantageous embodiments thereof are characterized in dependent claims 2 to 9.

Advantageously, with the present invention a normal jaw clamping effect and a self-locking function is achieved by manually gripping the top cover shell to actuate the thrust bearing ring and thread socket by means of the shallow and deep recesses provided on the top cover. According to a preferred further embodiment, there is an additional wear-resistant ring between the thrust bearing ring and the threaded socket.

Further, the present invention provides added safety by preventing the shell cover from rotating along with the spindle by mating the joint member with the driving device, and it is advantageously possible to loose nuts through the forward and reverse action of the driving device by means of tight engagement of the body member and sleeve.

Further, the present invention advantageously provides a means to manually tighten or loose a gripping force of the drill to the use of a rod-shaped tool that is inserted into holes provided in the threaded socket in conjunction with a wrench and sleeve where the force is applied to the rod-shaped tool and a wrench in opposite directions.

Other objects, features and aspects of the present invention are discussed in greater detail below.

### BRIEF DESCRIPTION OF THE DRAWINGS

FIG. 1 is a three dimensional view of a chuck unit for a power drill according to the prior art.
FIG. 2 is an exploded view of the chuck of the present invention.
FIG. 3 is a cross-sectional view of the chuck according to the present invention.
FIG. 4 is a cross-sectional view of the chuck in its normal operational mode according to the present invention.
FIG. 5 is a cross-sectional view of the chuck in its thrust operational mode according to the present invention.
FIG. 6 is a schematic drawing of the chuck with rod-shaped tool and wrench according to the present invention.
FIG. 7 is a schematic drawing of the present invention inserted over a nut.

### DETAILED DESCRIPTION OF THE PREFERRED EMBODIMENT

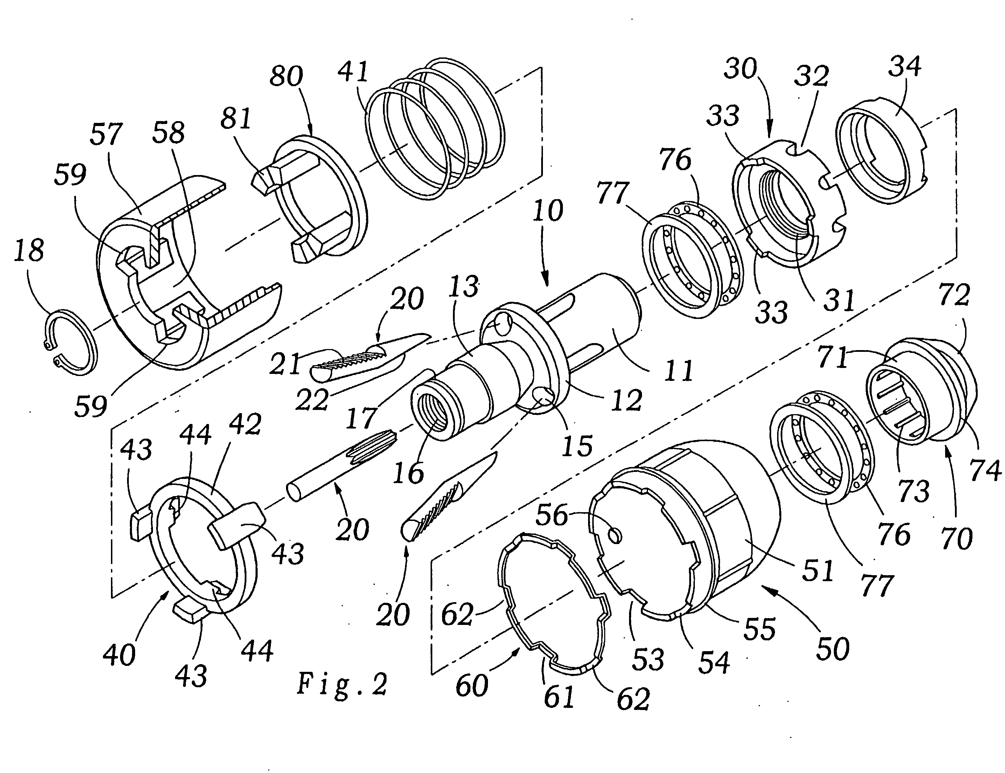

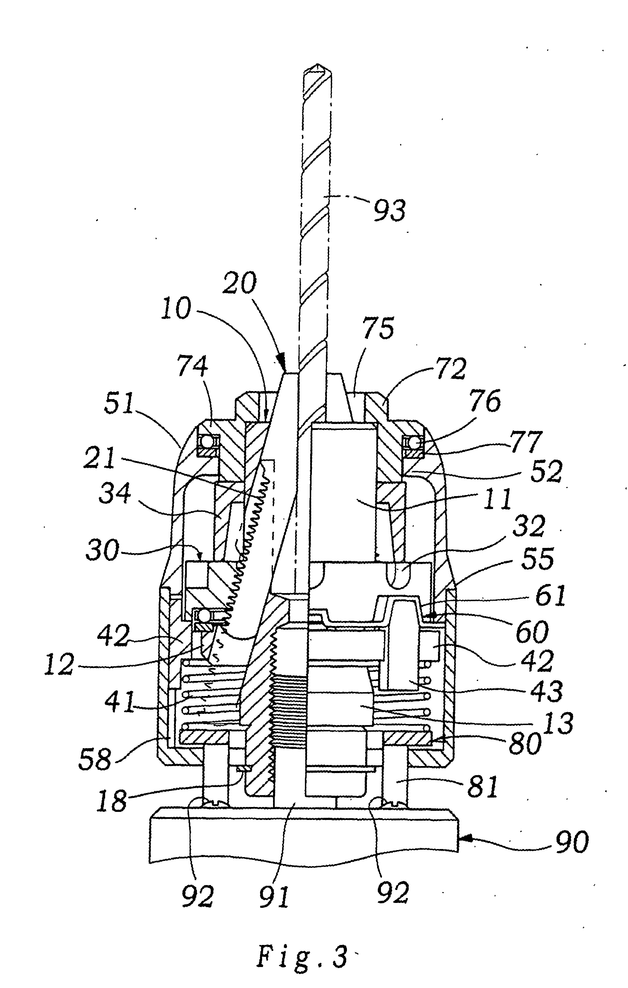

Referring to FIGS. 2 and 3, a chuck includes:

A cylindrical body 10 comprised of a forward section 11, collar 12, and rearward section 13. The forward section 11 having center through-hole 14 formed within, the collar 12 having angularly disposed guide channels 15 intersecting center through-hole 14, and said rearward section 13 having a threaded hole 16 provided to mate with the spindle 91 of driving device 90, and a positioning groove 17 provided at its base.

A plurality of jaw members 20 positioned slideably in guide channels 15, each of which having a threaded surface 21 formed on the outer side and a gripping surface 22 on its forward inner surface.

A threaded socket 30 disposed about collar 12 of body 10, having a tapered screw threaded surface 31 formed on its internal surface in threaded engagement with threaded surface 21 of the jaw members, a plurality of recessed hole 32 formed on its surface, and a number of teeth 33 formed on the bottom.

A socket cover 34 axially mounted around the forward section 11 of body 10 to contact threaded socket 30.

A flexible thrust bearing ring assembly 40 comprised of a spring 41 and a thrust bearing ring 42 where the thrust bearing ring 42 is ring shaped and embossed with a plurality of toothlike members 43 with sloping sides around its periphery for mating with teeth 33 on threaded socket 30 and spring 41 inserted along the bottom edge of thrust bearing ring 42 to flexibly support thrust bearing ring 42.

A cover shell 50 composed of a top cover shell 51 and bottom cover shell 57. The bottom cover shell 57 having an opening in its top and bottom provided for insertion of forward section 11 of body 10, with locking ring 52 disposed about the inside wall of its top opening and interchanging deep and shallow locking recesses 53, 54 to receive toothlike members 43 on thrust bearing ring 42 and having wedge shaped stops 55 formed along its outer edges. Covers over the top and bottom opening for covering rearward section 13 of body 10 and whose top opening may be engaged over the wedge shaped stops 55 on the top cover shell 51 to maintain the axial position of the bottom cover shell 57, whose inner surface is disposed with a plurality of vertically recessed channels 58 to slideably engage toothlike members 43 on thrust bearing ring 42, bottom opening provided for insertion of rearward section 13 and position member 18 disposed in positioning groove 17, also with fan shaped slots 59 formed on either sides of the lower opening provided for insertion of joint member 80.

A wear-resistant ring 60, made of wear resistant material, mounted at the lower opening of the top cover shell 51, having deep and shallow locking recesses 53, 54 disposed opposite the deep and shallow recessed ring 61, 62 provided for engagement and protection of top cover shell 51 and on both sides of the deep and shallow recesses 61, 62 are disposed with sloped toothlike members 43 that assist the top and bottom movement of the teeth as the wear-resistant ring 60 is rotated.

A sleeve 70 having a positioning member 71 and a sleeve member 72, positioning member 71 having cylindrical center through-hole and a plurality of positioning ridges 73 raised from the inner wall for engagement of the forward section 11 of body 10, a stop flange 74 raised around the outer wall that forms a rest surface with the locking ring 52 on the top cover shell 51 when the positioning member 71 is inserted into forward section 11 and a plurality of angular recesses 75 disposed inside sleeve member 72 provided for insertion of nut 94.

Two bearing assemblies comprised of a bearing ring 76 and washer 77 sandwiched together and individually inserted between the stop flange 74 and locking ring 52 and between the threaded socket 30 and collar 12 to allow smooth movement and reduce friction.

The joint member 80, having a ring shape, disposed between the spring 41 and bottom cover shell 57, whose bottom is attached with a plurality of joint pieces 81, the joint pieces 81 can be inserted through the fan shaped slots 59 joining with bolt 92 on driving device 90 and subject to the force from spring 41 and situated in contact with front end of driving device 90.

Now that the above construction is understood, below is provided a description of the operation of the present invention.

The present preferred embodiment of the invention is best illustrated by the foregoing description of a drill bit 93 being clamped by the chuck. Drill bit 93 is inserted between center through-hole 14 and gripping surface 22 of each jaw members 20. As spindle 91 rotates quickly in its operational direction, the center through-hole 14 and the jaw members 20 above rotate instantly. Through the action of the tapered threaded surface 31 of the threaded socket 30 with the threaded surface 21 of jaw members 20, the jaw members 20 instantly incline upwards causing the outer end of the jaw members 20 to gradually move toward their center point, clamp down on the drill bit 93 and increase the strength of the gripping surface 22 creating a stable grip. Jaw members 20 are not permitted to move further forward due to the presence of drill bit 93. Threaded surface 21 and the tapered threaded surface 31 of threaded socket 30 join in threaded engagement causing threaded socket 30 and body 10 to rotate simultaneously, top cover shell 51, bottom cover shell 57, spring 41 and thrust bearing ring 42 are joined together as one unit since joint member 80 is engaged to bolt 92 on driving device 90 and thus will not rotate along with spindle 91 providing added value and safety during use.

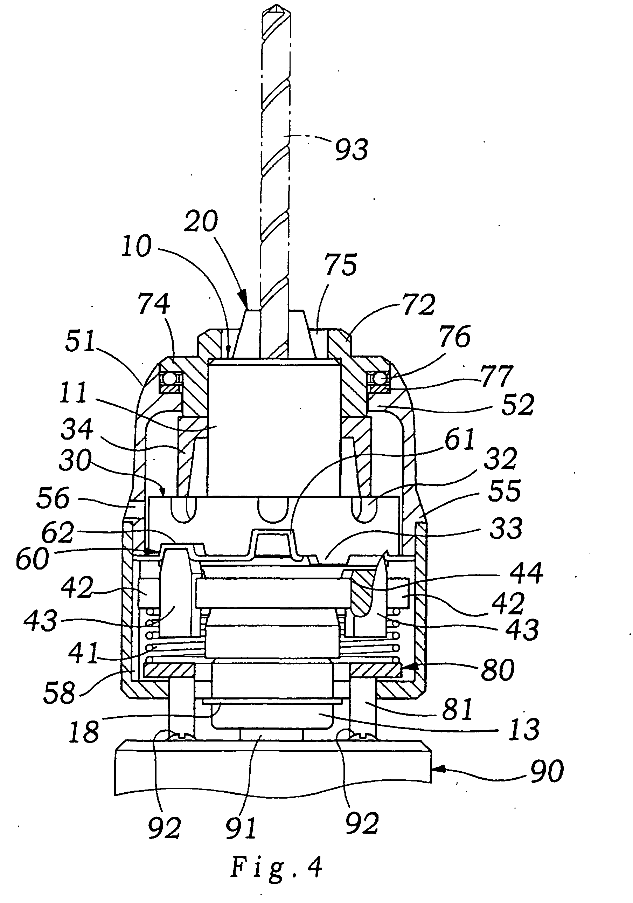

Fig. 4 shows a schematic of the present invention in a normal operation mode. By applying force to the top cover shell 51, the user adjusts the rotational position and selects the position of engagement between the shallow recesses 62 on wear-resistant ring 60 and toothlike members 43. At this time, the thrust bearing ring 42 will be supported by the wear-resistant ring 60 and move downward, teeth 44 will disengage from teeth 33 on the threaded socket 30 causing the threaded socket 30 to be free of any contact while being rotated.

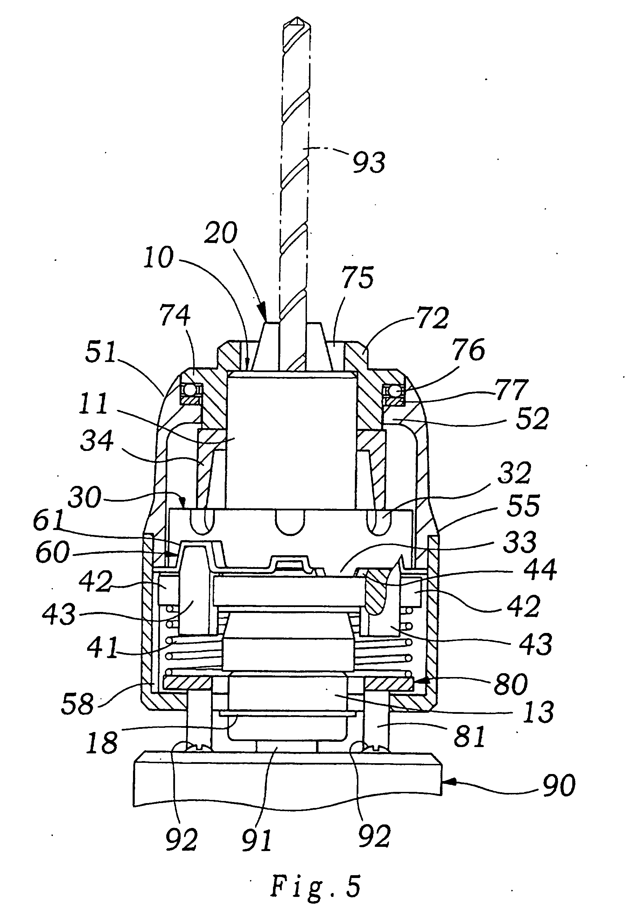

Fig. 5 shows a schematic of the present invention in thrust operation mode. When the drill bit 93 rotates in the operational direction during drilling and is subject to significant resistance or the gripping force around the drill bit 93 is insufficient, the top cover shell 51 may be turned during operation or rest so the wear-resistant ring 60 is rotated to the deep recess 61 without safety concerns since the upper shell does not rotate during operation.

At this time, the thrust bearing ring 42 will move upwards due the flex action of the spring 41 and the toothlike members 43 engage with deep recess 61 and teeth 33 will simultaneously mesh with teeth 44 on thrust bearing ring 42 and the rotationally positioned thrust bearing ring 42 move up and down in recessed channels 58 provided in bottom cover shell 57 to allow tighter engagement of the threaded surface 31 on threaded socket 30 and threaded surface 21 on jaw members 20, eliminating the gap existing between the threads and increasing the stability of the gripping force and the amount of torque exerted.

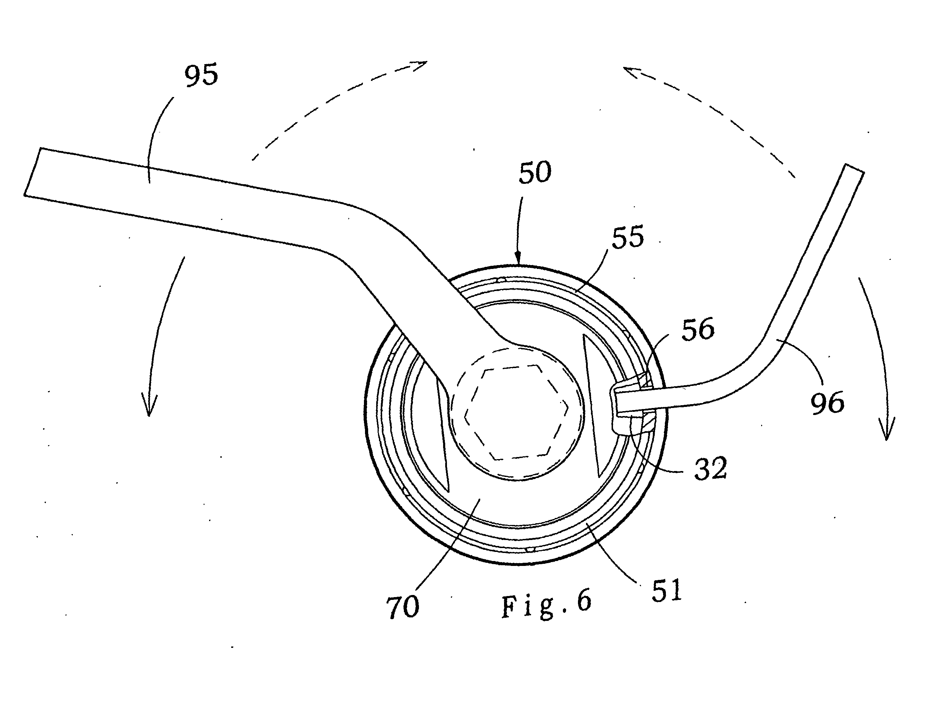

Fig. 6 shows the position of hole 56 in top cover shell 51 disposed opposite the recessed hole 32 on threaded socket 30 provided for insertion of rod-shaped tool 96 into recessed hole 32 through hole 56 and by inserting wrench 95 over sleeve 70 and exerting force in an opposite direction to allow tighter engagement of the threaded surface 31 on threaded socket 30 and threaded surface 21 on jaw members 20 to achieve manually loosening or tightening of drill bit 93.

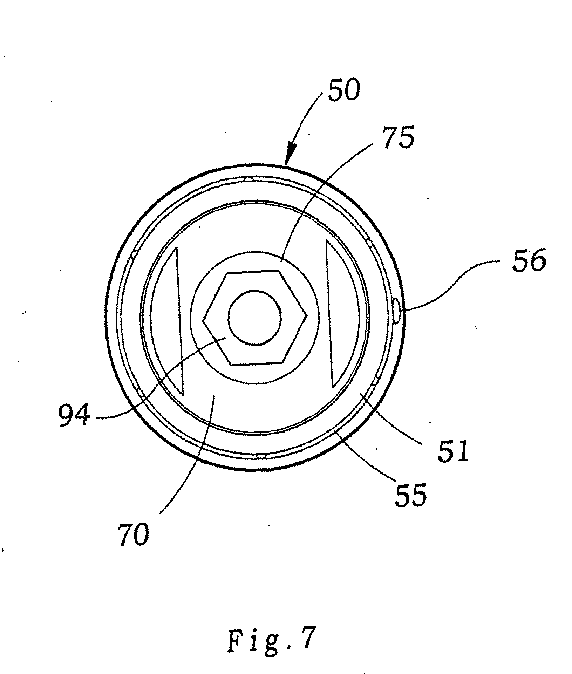

And referring to Fig. 7 shows a plurality of angular recesses 75 disposed about the inner wall of sleeve 70 provided for insertion of nut 94 and allowing spindle 91 to turn and achieve loosening or tightening of nut 94.

## Claims

1. A self-locking chuck adapted to a rotational spindle (91), comprising:
a cylindrical body (10) having a forward section (11), a collar (12) and a rearward section (13), the forward section (11) having a center through-hole (14), the collar (12) being disposed with angularly disposed guide channels (15) wherein said rearward section (13) is provided for mounting on the spindle (91) of a driving device (90);
a plurality of jaw members (20), slidably disposed in guide channels (15), each having a threaded surface (21) formed on its outer side;
a threaded socket (30) disposed about the collar (12) of body (10) in threaded engagement with the threaded surface (21) of the jaw members (20);
a socket cover (34) axially mounted around the body (10) to allow threaded engagement of the threaded socket (30) and the jaw members (20);
a cover shell (50) having of a top cover shell (51) and bottom cover shell (57) covering the forward section (11) and the rearward section (13) of the body (10);
a flexible thrust bearing ring assembly (40) inserted in the bottom of the cover shell (57), comprising a spring (41) and a thrust bearing ring (42), said ring (42) being in slideable action axial engagement with the bottom of the cover shell (57) and having toothlike members (43);
a sleeve (70) mounted on the forward section (11) of the body (10) used to axially position the top cover shell (51) and the socket cover (34);
a first bearing assembly inserted between the threaded socket (30) and the collar (12); and
a joint member (80) that inserts through the bottom cover shell (57) and joins to the driving device (90) to prevent the cover shell (50, 51, 57) from rotating along with the spindle (91) during operation;
**characterized by** a second bearing assembly (76, 77) inserted between the sleeve (70) and the top cover shell (51),
said top cover shell (51) having interchanging deep and shallow locking recesses (53,54) to mate with the toothlike members (43) on the thrust bearing ring (42) and being rotatable to obtain an upper or lower axial position of the thrust bearing ring (42),
said chucking and self-locking function being achieved in the upper axial position of the thrust bearing ring (42).

2. The self-locking chuck as in claim 1, wherein said threaded socket (30) has a plurality of recessed holes (32) formed on its surface and a plurality of teeth (33) formed on its bottom.

3. The self-lockeing chuck as in claim 1, wherein said thrust bearing ring (42) is circular in shape and disposed with a plurality of toothlike members (43) around its edges and a plurality of teeth (44) formed on the top edge of said thrust bearing ring (42) for mating with teeth (33) on threaded socket (30).

4. The self-locking chuck as in claim 1, wherein said top cover shell (51) having a hole (56) formed within and wedge shaped stops (55) disposed on the wall to axially position the bottom cover shell (57).

5. The self-locking chuck as in claim 1, wherein a wear-resistant ring (60) is positioned opposite the deep and shallow locking recesses (53, 54) on top cover shell (51).

6. The self-locking chuck as in claim 1, wherein said bottom cover shell (57) whose inner surface is disposed with a plurality of vertically recessed channels (58) in slideable axial engagement with the toothlike members (43) on the thrust bearing ring (42).

7. The self-locking chuck as in claim 1, wherein either side of the lower opening of said bottom cover shell (57) are formed with fan shaped slots (59).

8. The self-locking chuck as in claim 1, wherein the joint member (80), having a ring shape, is embossed with a plurality of joint pieces (81), said joint pieces (81) can be inserted through the fan shaped slots (59) forming a single unit with the driving device (90).

9. The self-locking chuck as in claim 1, wherein said sleeve (70) has a plurality of angular recesses (75) provided for loosening or tightening of a nut (94) or for engaging a wrench and combined with an opposite force from a rod-shaped tool (96) placed into the insert hole (56) that can produce tight engagement between the threaded surface (31, 21) on threaded socket (30) and jaw members (20).

## Patentansprüche

1. Selbstspannfutter, welches an eine drehende Spindel (91) angepaßt ist, mit:
einem zylindrischen Körper (10), bestehend aus einem Vorderabschnitt (11), einem Kranz (12) und einem Hinterabschnitt (13), wobei der Vorderabschnitt ein mittiges Durchgangsloch (14) aufweist, wobei der Kranz (12) mit winklig angeordneten Führungskanälen (15) versehen ist, und wobei der Hinterabschnitt (13) für eine Befestigung auf der Spindel (91) einer Antriebseinrichtung (90) ausgebildet ist;
mehreren Backenteilen (20), die gleitend verschiebbar in den Führungskanälen (15) angeordnet sind, wobei jedes Backenteil eine an der Außenseite gebildete Gewindefläche (21) aufweist;
einer Gewindemuffe (30), die rings um den Kranz (12) des Körpers (10) herum im Gewindeeingriff mit der Gewindefläche (21) der Backenteile (20) angeordnet ist;
einer Muffenabdeckung (34), die axial um den Körper (10) herum für einen Eingriff der Gewindemuffe (30) mit den Backenteilen (20) montiert ist;
einem Abdeckgehäuse (50), bestehend aus einem oberen Abdeckgehäuse (51) und einem unteren Abdeckgehäuse (57), welche den Vorderabschnitt (11) und den Hinterabschnitt (13) des Körpers (10) abdecken;
einer flexiblen Axiallagerringanordnung (40), die in das untere Abdeckgehäuse (57) eingesetzt ist, bestehend aus einer Feder (41) und einem Axiallagerring (42), wobei sich der Axiallagerring (42) mit dem unteren Abdeckgehäuse (57) im gleitend verschiebbaren, axialen Wirkeingriff befindet und zahnförmige Teile (43) aufweist;
einer Hülse (70), die an dem Vorderabschnitt (11) des Körpers (10) befestigt ist und die einem axialen Anordnen des oberen Abdeckgehäuses (51) und der Muffenabdeckung (34) dient;
einer ersten Lageranordnung, die zwischen der Gewindemuffe (30) und dem Kranz (12) eingesetzt ist; und mit
einem Verbindungselement (80), welches das untere Abdeckgehäuse (57) durchsetzt und mit der Antriebseinrichtung (90) verbunden ist, um das Abdeckgehäuse (50, 51, 57) am Drehen zusammen mit der Spindel (91) während einer Benutzung zu hindern,
**gekennzeichnet durch**
eine zweite Lageranordnung (76, 77), die zwischen der Hülse (70) und dem oberen Abdeckgehäuse (51) eingesetzt ist,
wobei das obere Abdeckgehäuse (51) sich abwechselnde tiefe und flache Verriegelungsausnehmungen (53, 54) aufweist, um mit den zahnförmigen Teilen (43) auf dem Axiallagerring (42) zusammenzupassen, und drehbar ist, um eine obere und untere axiale Anordnung des Axiallagerringes (42) zu erreichen, und
wobei die Spann- und Selbstsperr-Funktion in der oberen axialen Anordnung des Axiallagerringes (42) erreichbar ist.

2. Selbstspannfutter nach Anspruch 1, **dadurch gekennzeichnet, daß** die Gewindemuffe (30) mehrere ausgenommene Löcher (32), welche auf ihrer Oberfläche gebildet sind, und mehrere Zähne (33), welche an ihrer Unterseite gebildet sind, aufweist.

3. Selbstspannfutter nach Anspruch 1, **dadurch gekennzeichnet, daß** der Axiallagerring (42) kreisförmig ausgebildet ist und mit mehreren zahnförmigen Teilen (43) um seine Kanten herum und mit einer Vielzahl an Zähnen (44) ausgestattet ist, welche auf der oberen Kante des Axiallagerringes (42) zum Zusammenpassen mit den Zähnen (33) auf der Gewindemuffe (30) gebildet sind.

4. Selbstspannfutter nach Anspruch 1, **dadurch gekennzeichnet, daß** das obere Abdeckgehäuse (51) ein Loch (56), welches innerhalb der Wand gebildet ist, und keilförmige Anschläge (53) aufweist, welche an der Wand für eine axiale Anordnung des unteren Abdeckgehäuses (57) angeordnet sind.

5. Selbstspannfutter nach Anspruch 1, **dadurch gekennzeichnet, daß** ein verschleißfester Ring (60) gegenüber den tiefen und flachen Verriegelungsausnehmungen (53, 54) auf dem oberen Abdeckgehäuse (51) angeordnet ist.

6. Selbstspannfutter nach Anspruch 1, **dadurch gekennzeichnet, daß** die Innenfläche des unteren Abdeckgehäuses (57) mit mehreren vertikalen Ausnehmungskanälen (58) zum gleitend axial verschiebbaren Eingreifen mit den zahnförmigen Teilen (43) auf dem Axiallagerring (42) versehen ist.

7. Selbstspannfutter nach Anspruch 1, **dadurch gekennzeichnet, daß** jede Seite der unteren Öffnung des unteren Abdeckgehäuses (57) mit fächerförmigen Schlitzen (49) ausgebildet ist.

8. Selbstspannfutter nach Anspruch 1, **dadurch gekennzeichnet, daß** das Verbindungselement (80), welches ringförmig ausgebildet ist, mit mehreren Verbindungsstücken (81) versehen ist, wobei die Verbindungsstücke (81) durch die fächerförmigen Schlitze (59) zum Bilden einer Gesamteinheit mit der Antriebseinrichtung (90) einsetzbar sind.

9. Selbstspannfutter nach Anspruch 1, **dadurch gekennzeichnet, daß** die Hülse (70) eine Vielzahl an winkligen Ausnehmungen (75) aufweist, welche zum Lösen oder Festziehen einer Mutter (94) oder für einen Eingriff eines Schraubenschlüssels vorgesehen sind, und welche mit einer entgegengesetzten Kraft von einem stangenförmigen Werkzeug (96) in Verbindung stehen, welches in das Einsetzloch (56) platziert ist, welches eine feste Verbindung zwischen der Gewindefläche (31, 21) auf der Gewindemuffe (30) und den Backenteilen (20) herstellen kann.

## Revendications

1. Mandrin auto-serrant conçu pour une broche rotative (91), comprenant:
un corps cylindrique (10) ayant une section avant (11), un col (12) et une section arrière (13), la section avant (11) ayant un trou traversant central (14), le col (12) étant muni de canaux de guidage (15) disposés de façon angulaire, dans lequel ladite section arrière (13) est prévue pour être montée sur la broche (91) d'un dispositif d'entraînement (90) ;
une pluralité d'éléments formant mâchoires (20), disposés de manière coulissante dans les canaux de guidage (15), chacun ayant une surface filetée (21) formée sur son côté extérieur ;
une douille filetée (30) disposée autour du col (12) du corps (10) en mise en prise filetée avec la surface filetée (21) des éléments formant mâchoires (20) ;
un couvercle de douille (34) monté de façon axiale autour du corps (10) pour permettre la mise en prise filetée de la douille filetée (30) et des éléments formant mâchoires (20) ;
une enveloppe formant couvercle (50) ayant une enveloppe formant couvercle supérieur (51) et une enveloppe formant couvercle inférieur (57) recouvrant la section avant (11) et la section arrière (13) du corps (10) ;
un ensemble flexible formant bague de roulement de butée (40) inséré dans le fond de l'enveloppe formant couvercle inférieur (57), comprenant un ressort (41) et une bague de roulement de butée (42), ladite bague (42) étant dans une mise en prise axiale par action coulissante avec le fond de l'enveloppe formant couvercle (57) et ayant des éléments semblables à des
un manchon (70) monté sur la section avant (11) du corps (10) utilisé pour positionner de façon axiale l'enveloppe formant couvercle supérieur (51) et le couvercle de douille (34) ;
un premier ensemble formant palier inséré entre la douille filetée (30) et le col (12) ; et
un élément formant joint (80) qui s'insère à travers l'enveloppe formant couvercle inférieur (57) et qui rejoint le dispositif d'entraînement (90) pour empêcher l'enveloppe formant couvercle (50, 51, 57) de tourner en même temps que la broche (91) pendant le fonctionnement ;
**caractérisé par** un second ensemble formant palier (76, 77) inséré entre le manchon (70) et l'enveloppe formant couvercle supérieur (51),
ladite enveloppe formant couvercle supérieur (51) ayant des parties en retrait de verrouillage profondes et peu profondes (53, 54) pour s'accoupler avec les éléments semblables à des dents (43) sur la bague de roulement de butée (42) et pouvant être mise en rotation pour obtenir un positionnement axial supérieur ou inférieur de la bague de roulement de butée (42),
lesdites fonctions de serrage dans le mandrin et d'auto-serrage étant obtenues dans la position axiale supérieure de la bague de roulement de butée (42).

2. Mandrin auto-serrant selon la revendication 1, dans lequel ladite douille filetée (30) possède une pluralité de trous en retrait (32) formés sur sa surface et une pluralité de dents (33) formées sur son fond.

3. Mandrin auto-serrant selon la revendication 1, dans lequel ladite bague de roulement de butée (42) a une forme circulaire et est munie d'une pluralité d'éléments semblables à des dents (43) autour de ses bords et d'une pluralité de dents (44) formées sur le bords et d'une pluralité de dents (44) formées sur le bord supérieur de ladite bague de roulement de butée (42) pour accoupler avec les dents (33) sur la douille filetée (30).

4. Mandrin auto-serrant selon la revendication 1, dans lequel ladite enveloppe formant couvercle supérieur (51) possède un trou (56) formé en son sein et des butées en forme de coins (55) disposées sur la paroi pour positionner de façon axiale l'enveloppe formant couvercle inférieur (57).

5. Mandrin auto-serrant selon la revendication 1, dans lequel une bague résistant à l'usure (60) est positionnée en face des parties en retrait de verrouillage profondes et peu profondes (53, 54) sur l'enveloppe formant couvercle supérieur (51).

6. Mandrin auto-serrant selon la revendication 1, dans lequel ladite enveloppe formant couvercle inférieur (57) dont la surface intérieure est munie d'une pluralité de canaux verticalement en retrait (58) en prise axiale coulissante avec les éléments semblables à des dents (43) sur la bague de roulement de butée (42).

7. Mandrin auto-serrant selon la revendication 1, dans lequel l'un ou l'autre côté de l'ouverture inférieure de ladite enveloppe formant couvercle inférieur (57) est formé avec des fentes en forme d'éventail (59).

8. Mandrin auto-serrant selon la revendication 1, dans lequel l'élément formant joint (80), ayant une forme de bague, est estampé avec une pluralité de pièces formant joints (81), lesdites pièces formant joints (81) peuvent être insérées à travers les fentes en forme d'éventail (59) formant une unité unique avec le dispositif d'entraînement (90).

9. Mandrin auto-serrant selon la revendication de parties en retrait angulaires (75) prévues pour le desserrage ou le serrage d'un écrou (94) ou pour mettre en prise une clé et en combinaison avec une force opposée provenant d'un outil en forme de tige (96) placé dans le trou d'insertion (56) qui peut produire une mise en prise serrée entre la surface filetée (31, 21) sur la douille filetée (30) et les éléments formant mâchoires (20).
